# EUROPÄISCHE PATENTSCHRIFT

(11) **EP 0 933 674 B1**
(45) Veröffentlichungstag und Bekanntmachung des Hinweises auf die Patenterteilung: **12.03.2008**
(21) Anmeldenummer: 98123139.2
(22) Anmeldetag: 04.12.1998
(51) Int. Cl.: B05C 11/02

(54) **Farbvorhang-Auftragsvorrichtung**
Curtain coater
Coucheuse à rideau

(30) Priorität: 28.01.1998 DE 19803240
(43) Veröffentlichungstag der Anmeldung: 04.08.1999
(73) Patentinhaber: Voith Patent GmbH, 89522 Heidenheim (DE)
(72) Erfinder: Kustermann, Martin Dr., 89522 Heidenheim (DE)
(74) Vertreter: Jantsch, Sigrid

(56) Entgegenhaltungen:
- DE-A- 19 627 456
- US-A- 4 249 478
- US-A- 4 732 776

## Beschreibung

Die Erfindung betrifft eine Vorrichtung, in welcher mittels eines Farbvorhang-Auftragswerk flüssiges oder pastöses Auftragsmedium direkt oder indirekt auf eine Materialbahn, insbesondere aus Papier oder Karton, aufgetragen wird.

Das Auftragen von flüssigem oder pastösem Auftragsmedium auf Materialbahnen mittels eines Farbvorhangs bzw. Farbschleiers, das sogenannte "curtain coating", ist an sich bekannt. So offenbart beispielsweise die US-PS 5,624,715 ein Farbvorhang-Auftragswerk zum direkten Beschichten einer Materialbahn. Genauer gesagt befaßt sich die US-PS 5,624,715 mit dem Problem der Beeinträchtigung der gleichmäßigen Verteilung des Auftragsmedium-Schleiers auf der Materialbahn durch die von der laufenden Materialbahn mitgerissene Luft. Darüber hinaus ist aus der EP 0 517 223 B1 eine Vorrichtung bekannt, mit deren Hilfe im Vorfeld des Auftragsvorgangs Luftbläschen aus dem Auftragsmedium entfernt werden sollen, damit diese die Gleichmäßigkeit des Auftrags nicht beeinträchtigen können.

Ein weiteres Problem, das sich beim "curtain coating" beispielsweise gemäß US-A-4,249,478 stellt und mit dem sich die vorstehend diskutierten Druckschriften nicht befassen, ist die Dosierung des Auftragsmediums. Üblicherweise wird nämlich das mittels "curtain coating" aufgebrachte Auftragsmedium nicht durch anschließendes Abrakeln dosiert, so daß an die dosierte Abgabe des Auftragsmediums aus dem Farbvorhang-Auftragswerk hohe Anforderungen gestellt werden.

Erfindungsgemäß wird daher eine Vorrichtung zum direkten oder indirekten Auftragen von flüssigem oder pastösem Auftragsmedium auf eine laufende Materialbahn gemäß den unabhägigen Ansprüchen 1 bzw. 3 beansprucht.

Durch die erfindungsgemäß vorgesehene Strichmengenregelung kann das Auftragsmedium wohl dosiert aus dem Farbvorhang-Auftragswerk abgegeben werden, so daß sich insgesamt der gewünschte gleichmäßige Schichtauftrag auf der Materialbahn ergibt. Darüber hinaus ist die erfindungsgemäß vorgesehene Strichmengenregelung einfach aufgebaut, da sie nicht jeden der das Auftragsergebnis beeinflussenden Parameter gesondert überwacht und auf einem vorbestimmten Sollwert hält, sondern in Abhängigkeit von der Erfassung der Strichmenge die pro Zeiteinheit abgegebene Menge an Auftragsmedium einstellt. Das Farbvorhang-Auftragswerk kann dabei beispielsweise eine Verteilanordnung umfassen, welche das Auftragsmedium in Querrichtung der Materialbahn gleichmäßig verteilt und hierzu einen Verteilkanal, eine Zuführöffnung zum Einleiten von Auftragsmedium in den Verteilkanal, wenigstens einen Austrittsspalt zur gleichmäßigen Abgabe des Auftragsmediums in Form eines Auftragsmedium-Vorhangs bzw. -Schleiers, sowie gewünschtenfalls eine Abführöffnung zum Ableiten überschüssigen, in den Verteilkanal eingeleiteten Auftragsmediums aufweist.

Um die Gleichmäßigkeit des Auftrags nicht nur in Längsrichtung der Materialbahn, sondern auch in deren Querrichtung sicherstellen zu können, wird vorgeschlagen, daß die vom Farbvorhang-Auftragswerk pro Zeiteinheit abgegebene Auftragsmediummenge in einer Mehrzahl von in Querrichtung der Materialbahn aufeinanderfolgenden Auftragsabschnitten unabhängig voneinander beeinflußt wird. Dies kann beispielsweise dadurch erfolgen, daß die Stellvorrichtung eine Mehrzahl von in Querrichtung der Materialbahn verteilt angeordneten Stelleinheiten zum abschnittsweisen Einstellen der Breite des wenigstens einen Austrittsspalts des Farbvorhang-Auftragswerks umfaßt.

In einer Vielzahl von Fällen wird es allerdings genügen, die von dem Farbvorhang-Auftragswerk pro Zeiteinheit insgesamt abgegebene Auftragsmediummenge auf einen gewünschten Wert einzustellen. Hierzu kann die Stellvorrichtung beispielsweise eine Vorrichtung zum Einstellen der Förderleistung einer dem Farbvorhang-Auftragswerk zugeordneten Auftragsmedium-Pumpe umfassen. Zusätzlich oder alternativ kann die Stellvorrichtung eine Ventilanordnung umfassen zum Beeinflussen der Menge des pro Zeiteinheit durch die Zuführöffnung in den Verteilkanal eingeleiteten Auftragsmediums. Wiederum zusätzlich oder alternativ kann die Stellvorrichtung eine Stelleinheit zum Einstellen der Breite des wenigstens einen Austrittsspalts des Farbvorhang-Auftragswerks umfassen. Weiter ist es möglich, daß die Stellvorrichtung eine Ventilanordnung umfaßt zum Beeinflussen des aus der Abführöffnung wieder ausgeleiteten Bruchteils des über die Zuführöffnung in den Verteilkanal eingeleiteten Auftragsmediums.

Die Strichmengen-Sensoreinrichtung ist zur direkten oder indirekten Erfassung der Strichmenge der auf die Materialbahn aufgetragenen Auftragsmedium-Schicht ausgebildet.

Zur direkten Erfassung kann die Strichmengen-Sensoreinrichtung eine erste Sensoreinheit aufweisen, welche in Laufrichtung der Materialbahn vor dem Farbvorhang-Auftragswerk angeordnet ist und ein erstes Sensorsignal bereitstellt, ferner eine zweite Sensoreinheit aufweisen, welche in Laufrichtung der Materialbahn hinter dem Farbvorhang-Auftragswerk angeordnet ist und ein zweites Sensorsignal bereitstellt, und schließlich eine Differenzbildungseinheit aufweisen, welche das erste Sensorsignal von dem zweiten Sensorsignal abzieht und das Differenzsignal als das Strichmengensignal bereitstellt. Hierbei mißt die erste Sensoreinheit die Eigenschaften der Materialbahn im "Rohzustand", d.h. vor dem hier betrachteten Beschichtungsvorgang, was aber nicht ausschließt, daß die Materialbahn bereits einmal oder auch mehrmals beschichtet worden ist. Die zweite Sensoreinheit mißt den erzielten Endzustand, so daß sich die Beschichtung als solche in der Differenz der beiden Meßsignale niederschlägt. Die Laufzeit der Materialbahn zwischen der ersten Sensoreinheit und der zweiten Sensoreinheit kann bei der Bildung des Differenzsignals berücksichtigt werden. Es ist jedoch grundsätzlich auch möglich, davon auszugehen, daß die von den beiden Sensoreinheiten gelieferten Signale quasistationäre Signale sind, welche sich nur langsam ändern, so daß die Laufzeit unberücksichtigt bleiben kann.

Die Strichmenge kann beispielsweise mittels eines optischen Meßverfahrens bestimmt werden, bei welchem der Reflexions- oder der Transmissionsgrad der Materialbahn gemessen wird. Es sind aber auch radioaktive Meßverfahren bekannt, bei welchen die Extinktion der Strahlung einer radioaktiven Quelle, üblicherweise einer β-Strahlungsquelle, bekannter Intensität durch die Materialbahn bestimmt wird. Letztere Meßmethode kann von Zeit zu Zeit kalibriert werden, indem man die Strahlungsquelle neben die Materialbahn fährt und die Intensität der ungedämpften radioaktiven Quelle bestimmt.

Sämtliche vorstehend genannten Meßverfahren eignen sich dazu, die Strichmenge in Querrichtung der Materialbahn ortsaufgelöst zu bestimmen. Hierzu kann beispielsweise ein Meßkopf längs einer in Querrichtung der Materialbahn verlaufenden Führung hin- und herbewegt werden.

Eine indirekte Strichmengen-Erfassung kann beispielsweise mittels einer Strichmengen-Sensoreinrichtung erfolgen, welche eine erste der Zuführöffnung der Verteileinrichtung zugeordnete (d.h. von dieser gewünschtenfalls auch über ein größeren Abstand entfernt angeordnete, mit dieser jedoch in Sensorverbindung stehende) Sensoreinheit umfaßt, eine zweite der Abführöffnung der Verteileinrichtung zugeordnete Sensoreinheit umfaßt, und eine Differenzbildungseinheit umfaßt, welche die von den beiden Sensoreinheiten bereitgestellten Sensorsignale voneinander abzieht und das Differenzsignal als das Strichmengensignal bereitstellt. Die erste Sensoreinheit und die zweite Sensoreinheit können in Leitungen angeordnet sein, welche an der Zuführöffnung bzw. der Abführöffnung in den Verteilkanal münden; sie können aber auch unmittelbar an der Zuführ- bzw. Abführöffnung vorgesehen sein.

Bei der vorstehend diskutierten indirekten Strichmengenmessung können die ersten und zweiten Sensoreinheiten jeweils eine Volumenstrom-Meßvorrichtung umfassen. Es ist jedoch auch möglich, daß die ersten und zweiten Sensoreinheiten jeweils eine Massendurchfluß-Meßvorrichtung umfassen.

Zur weiteren Verbesserung der Präzision der Strichmngenerfassung wird vorgeschlagen, daß die erfindungsgemäße Auftragsvorrichtung eine Sensoreinrichtung zum Erfassen der Laufgeschwindigkeit der Materialbahn oder/und eine Sensoreinrichtung zum Erfassen des Feststoffgehalts des Auftragsmediums bzw. der bestrichenen Materialbahnbreite umfaßt.

Darüber hinaus kann in Laufrichtung der Materialbahn nach dem Farbvorehang-Auftragswerk eine Trocknungsvorrichtung vorgesehen sein, welche bei direkter Strichmengenerfassung vorzugsweise vor der zweiten Sensoreinheit angeordnet ist.

Die Erfindung wird im folgenden an Hand der beigefügten Zeichnung an Ausführungsbeispielen näher erläutert werden. Es stellt dar:
- Fig. 1: eine grobschematische Darstellung einer erfindungsgemäßen Farbvorhang-Auftragsvorrichtung; und
- Fig. 2: eine Schnittansicht längs der Linie II-II des Farbvorhang-Auftragswerk gemäß Fig. 1.

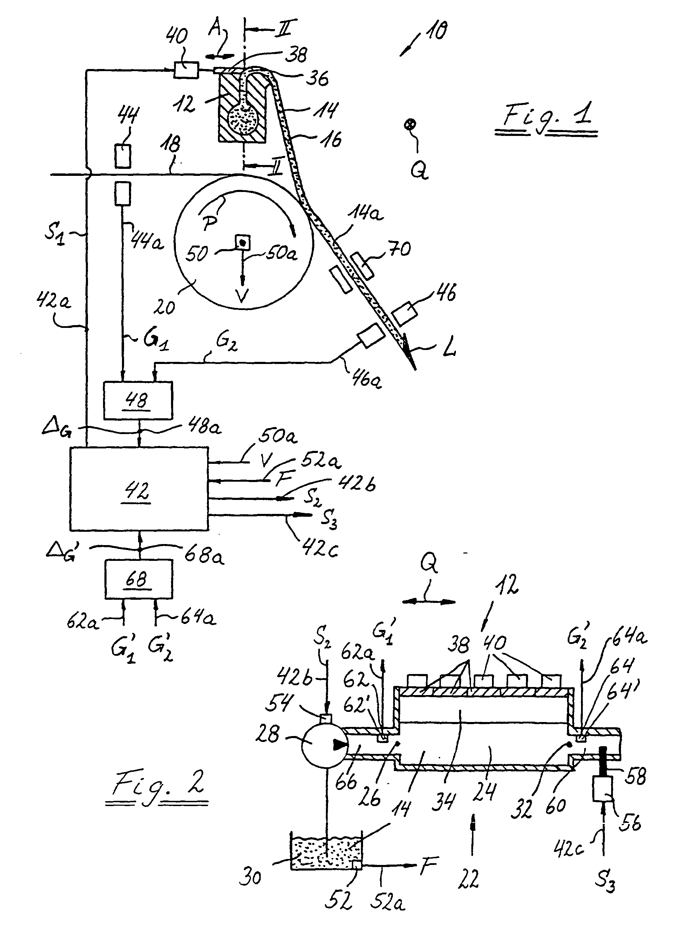

In Fig. 1 ist eine erfindungsgemäße Auftragsvorrichtung allgemein mit 10 bezeichnet. Sie umfaßt ein Auftragswerk 12, das flüssiges oder pastöses Auftragsmedium 14 in Form eines Farbvorhangs bzw. Farbschleiers 16 auf eine sich in Richtung des Pfeils L bewegende Materialbahn 18 aufträgt. Die Materialbahn 18 ist in dieser Darstellung im Bereich des Auftragswerks 12 um eine sich in Richtung des Pfeils P drehende Stützwalze 20 herumgeführt. Es sind jedoch auch andere geeignete Bahnführungen denkbar.

Wie in Fig. 2 dargestellt ist, umfaßt das Auftragswerk 12 eine Verteilanordnung 22 mit einem Verteilkanal 24, dem das Auftragsmedium 14 über eine Zuführöffnung 26 zugeführt wird, und zwar mittels einer Zuführpumpe 28 aus einem Auftragsmediumvorrat 30. Der Großteil des über die Zuführöffnung 26 in den Verteilkanal 24 eingeleiteten Auftragsmediums 14 wird aus diesem Verteilkanal wieder über eine Abführöffnung 32 ausgeleitet, und nur ein geringer Anteil wird über einen Austrittskanal 34 einem Austrittsspalt 36 (siehe Fig. 1) zugeführt und dort in Form des Farbschleiers 16 abgegeben. Auf diese Weise wird sichergestellt, daß sich das Auftragsmedium 14 in dem Verteilkanal 24 mit einer so hohen Strömungsgeschwindigkeit bewegt, daß Sedimentieren von in dem Auftragsmedium 14 enthaltenen Feststoffen zuverlässig vermieden wird.

Zur Definition der Breite des Austrittsspalts 36 ist eine Mehrzahl von in Querrichtung Q der Materialbahn 18 verteilt angeordneten Schieberelementen 38 vorgesehen, die mittels Aktuatoren 40 verstellt werden können (Richtung des Doppelpfeils A in Fig. 1). Die Schieberelemente 38 ermöglichen eine abschnittsweise Einstellung der Breite des Austrittsspalts 36 und somit eine Profilierung des auf die Materialbahn aufgetragenen Strichs 14a in Querrichtung Q der Materialbahn 18.

Die Aktuatoren 40 werden von einer Steuereinheit 42 aus angesteuert, die die Sollstellwerte für die Aktuatoren 40 auf Grundlage verschiedener Sensorsignale bestimmt, wobei diese Sensorsignale derart gewählt sind, daß die Auskunft über die Strichmenge der auf die Materialbahn 18 aufgetragenen Schicht Auskunft geben.

So kann gemäß Fig. 1 in Laufrichtung L der Materialbahn 18 vor dem Auftragswerk 12 ein erster Meßrahmen 44 zur Erfassung der Eigenschaften der ungestrichenen Materialbahn 18 angeordnet sein und kann in Laufrichtung L hinter dem Auftragswerk 14 ein zweiter Meßrahmen 46 vorgesehen sein, der in Aufbau und Funktion mit dem ersten Meßrahmen 44 identisch ist. Jeder der Meßrahmen 44 und 46 umfaßt einen (nicht im einzelnen dargestellten) Meßkopf, der längs einer (ebenfalls nicht im einzelnen dargestellten) Führung in Querrichtung Q der Materialbahn 18 hin- und herbewegbar ist. Das Meßprinzip der Meßköpfe der Meßrahmen 44, 46 kann beispielsweise auf einer optischen Messung des Absorptionsgrads oder/und Transmissionsgrads der Materialbahn 18 beruhen. Es ist jedoch auch möglich, daß das Extinktionsvermögen der Materialbahn 18 für radioaktive Strahlung, vorzugsweise β-Strahlung, bestimmt wird.

Die ersten und zweiten Meßrahmen 44 und 46 stellen Strichmengensignale G₁ und G₂ bereit, die über Signalleitungen 44a und 46a einem Differenzbildungsglied 48 zugeführt werden. Das Differenzbildungsglied 48 subtrahiert das Strichmengensignal G₁ des ersten Meßrahmens 44 von dem Strichmengensignal G₂ des zweiten Meßrahmens 42, um so ein Differenzsignal Δ_{G} bereitzustellen, das die Strichmengeneigenschaften der auf die Materialbahn 18 aufgetragenen Schicht 14a angibt. Das vorstehend angesprochene Differenzsignal Δ_{G} wird der Steuereinheit 42 über eine Signalleitung 48a zugeführt. Die Steuereinheit 42 bestimmt aus diesem Differenzsignal Δ_{G} und gewünschtenfalls auf Grundlage von Erfassungssignalen weiterer Sensoren Stellsignale S₁ für die Aktuatoren 40 und gibt sie an diese über Signalleitungen 42a aus.

Der Anzahl weiterer Sensorsignale, die von der Steuereinheit 42 zur Bestimmung der Stellsignale S₁ für die Aktuatoren 40 zusätzlich zu den Strichmengensignalen G₁ und G₂ der beiden Meßrahmen 44 und 46 bzw. Δ_{G} des Differenzglieds 48 herangezogen werden, ist keine Grenze gesetzt. Als Beispiele seien hier nur zwei derartige Sensorsignale angeführt: Nämlich zum einen das Geschwindigkeitssignal V eines Geschwindigkeitssensors 50, der die Laufgeschwindigkeit der Materialbahn 18 beispielsweise aus der Drehzahl der Gegenwalze 20 ableitet, und zum anderen das Signal F eines Auftragsmedium-Sensors 52, das Auskunft über die Zusammensetzung und insbesondere den Feststoffgehalt des Auftragsmediums 14 in dem Auftragsmediumvorrat 30 gibt. Diese beiden Erfassungssignale V und F werden der Steuereinheit 42 über Signalleitungen 50a bzw. 52a zugeführt.

Die von den Schieberelementen 38 und den zugehörigen Aktuatoren 40 gebildete Stellvorrichtung kann die Dosierung des an die Materialbahn 18 abgegebenen Auftragsmediums 14 grundsätzlich allein bewerkstelligen. Zusätzlich oder alternativ kann die abgegebene Auftragsmediummenge aber auch über weitere Stellvorrichtungen dosiert werden.

Beispielsweise kann die Förderleistung der Förderpumpe 28 variiert werden, indem die Steuereinheit 42 über eine Signalleitung 42b ein entsprechendes Stellsignal S₂ an eine Antriebseinheit 54 der Pumpe 28 ausgibt. Eine weitere zusätzliche oder alternative Möglichkeit der Einflußnahme besteht darin, über eine Signalleitung 42c die Stelleinheit 56 einer Ventileinrichtung 58 entsprechend anzusteuern (Steuersignal S₃). Die Ventileinrichtung 58 ist im Ausführungsbeispiel gemäß Fig. 2 als Schieberventil ausgebildet und in einer an die Abführöffnung 32 des Verteilkanals 24 anschließenden Abführleitung 60 angeordnet ist. Mittels des Schieberventils 58 kann der Bruchteil des über die Zuführöffnung 26 in den Verteilkanal 24 eingeleiteten Auftragsmediums 14 variiert werden, der durch den Austrittsspalt 36 in Form des Farbvorhangs 16 an die Materialbahn 18 abgegeben wird.

Neben der vorstehend beschriebenen, direkten Strichmengenmessung mittels der Meßrahmen 44 und 46 kann die Strichmenge der auf die Materialbahn 18 aufgetragenen Schicht 14a auch indirekt ermittelt werden, beispielsweise mittels zweier Strömungsmesser 62 und 64, von denen der eine 62 in einer zur Zuführöffnung 26 führenden Zuführleitung 66 angeordnet ist und von denen der andere 64 in der Abführleitung 60 angeordnet ist. Die Strömungsmesser können dabei beispielsweise Volumenstrom-Meßgeräte 62 und 64 sein. Es ist jedoch auch möglich, daß es sich dabei um Massenstrom- bzw. Massendurchfluß-Meßgeräte 62' und 64' handelt. Die Erfassungssignale G₁' und G₂' der Strömungsmesser 62 und 64 bzw. 62' und 64' werden über Signalleitungen 62a und 64a an ein Differenzbildungsglied 68 weitergeleitet, das das Signal G₂' des abführseitigen Strömungsmessers 64 von dem Erfassungssignal G₁' des zuführseitigen Strömungsmessers 62 abzieht und somit ein Differenzsignal Δ_{G'} bereitstellt, das Auskunft über die durch den Austrittsspalt 36 an die Materialbahn 18 abgegebene Auftragsmediummenge gibt. Dieses Differenzsignal Δ_{G'} wird über eine Signalleitung 68a an die Steuereinheit 42 übermittelt, die hieraus gewünschtenfalls unter Heranziehung weiterer Sensorsignale, beispielsweise über die Laufgeschwindigkeit der Materialbahn 18 oder/und des Feststoffgehalts des Auftragsmediums, die Strichmenge der Auftragsschicht 14a bestimmt.

Selbstverständlich ist es möglich, in ein und derselben Farbvorhang-Auftragsvorrichtung 10 sowohl die Meßrahmen 44 und 46 als auch die Volumenstrommesser 62 und 64 als auch die Massendurchflußmesser 62' und 64' in beliebiger Kombination vorzusehen, um durch Vergleich der verschiedenen Strichmengensignale insgesamt die Genauigkeit der Strichmengenerfassung zu erhöhen. Darüber hinaus ist es beispielsweise möglich, durch Variation der Förderleistung der Zuführpumpe 28 oder/und des Abführquerschnitts durch Beeinflussung der Ventileinrichtung 58 eine Vordosierung der Menge des an die Materialbahn 18 abgegebenen Auftragsmediums 14 vorzunehmen und diese Auftragsmenge mittels der Schieber 38 und der Aktuatoren 40 fein zu dosieren.

Nachzutragen ist noch, daß zwischen dem Auftragswerk 12 und dem zweiten Meßrahmen 46 eine Trocknungsvorrichtung 70 an sich bekannten Aufbaus vorgesehen sein kann. Mit Hilfe dieser Trocknungsvorrichtung 70 können Meßfehler, die beispielsweise durch in der Auftragsschicht 14a noch vorhandene Feuchtigkeit hervorgerufen werden könnten, gemindert vorzugsweise vollständig vermieden werden.

## Patentansprüche

1. Vorrichtung (10) zum direkten oder indirekten Auftragen von flüssigem oder pastösem Auftragsmedium (14) auf eine laufende Materialbahn (18), insbesondere aus Papier oder Karton, umfassend:
- ein Farbvorhang-Auftragswerk (12),
- wenigstens eine Sensoreinrichtung (44/46/48, 62/64/68, 62'/64'/68) zum Erfassen der Strichmenge der auf die Materialbahn (18) aufgetragenen Auftragsmedium-Schicht (14a) und zum Bereitstellen eines entsprechenden Strichmengen-Signals (Δ_{G}, Δ_{G'}),
- wenigstens eine Stellvorrichtung (38/40, 28/54, 58/56) zum Verändern wenigstens einer Stellgröße des Farbvorhang-Auftragswerks (12), von welcher die Strichmenge der auf die Materialbahn (18) aufgetragenen Auftragsmedium-Schicht (14a) abhängt, und
- eine Steuereinheit (42), welche das von der wenigstens einen Sensoreinrichtung (44/46/48, 62/64/68, 62'/64'/68) bereitgestellte Strichmengen-Signal (Δ_{G}, Δ_{G'}) empfängt, in Abhängigkeit dieses Strichmengen-Signals (Δ_{G}, Δ_{G'}) wenigstens einen Sollwert für die wenigstens eine Stellgröße bestimmt und die wenigstens eine Stellvorrichtung (38/40, 28/54, 58/56) auf Grundlage des wenigstens **einen Stellgrößen-Sollwerts ansteuert,**
wobei die Strichmengen-Sensoreinrichtung (44/46/48) zum Erfassen der Strichmenge der auf die Materialbahn (18) aufgetragenen Auftragsmedium-Schicht (14a) umfaßt:
- eine erste Sensoreinheit (44), welche in Laufrichtung (L) der Materialbahn (18) vor dem Farbvorhang-Auftragswerk (12) angeordnet ist und ein erstes Sensorsignal (G₁) bereitstellt,
- eine zweite Sensoreinheit (46), welche in Laufrichtung (L) der Materialbahn (18) hinter dem Farbvorhang-Auftragswerk (12) angeordnet ist und ein zweites Sensorsignal (G₂) bereitstellt, und
- eine Differenzbildungseinheit (48), welche das erste Sensorsignal (G₁) von dem zweiten Sensorsignal (G₂) abzieht und das Differenzsignal (Δ_{G}) als das Strichmengensignal bereitstellt.

2. Auftragsvorrichtung nach Anspruch 1,
**dadurch gekennzeichnet, daß** das Farbvorhang-Auftragswerk (12) eine Verteilanordnung (22) zum gleichmäßigen Verteilen des Auftragsmediums (14) in Querrichtung (Q) der Materialbahn (18) umfaßt,
mit einem Verteilkanal (24),
mit einer Zuführöffnung (26) zum Einleiten von Auftragsmedium (14) in den Verteilkanal (24),
mit wenigstens einem Austrittsspalt (36) zur gleichmäßigen Abgabe des Auftragsmediums (14) in Form eines Auftragsmedium-Vorhangs bzw. -Schleiers (16), sowie
gewünschtenfalls mit einer Abführöffnung (32) zum Ableiten überschüssigen, in den Verteilkanal (24) eingeleiteten Auftragsmediums (14).

3. Vorrichtung (10) zum direkten oder indirekten Auftragen von flüssigem oder pastösem Auftragsmedium (14) auf eine laufende Materialbahn (18), insbesondere aus Papier oder Karton, umfassend:
- ein Farbvorhang-Auftragswerk (12),
- wenigstens eine Sensoreinrichtung (44/46/48, 62/64/68, 62'/64'/68) zum Erfassen der Strichmenge der auf die Materialbahn (18) aufgetragenen Auftragsmedium-Schicht (14a) und zum Bereitstellen eines entsprechenden Strichmengen-Signals (Δ_{G}, Δ_{G'}),
- wenigstens eine Stellvorrichtung (38/40, 28/54, 58/56) zum Verändern wenigstens einer Stellgröße des Farbvorhang-Auftragswerks (12), von welcher die Strichmenge der auf die Materialbahn (18) aufgetragenen Auftragsmedium-Schicht (14a) abhängt, und
- eine Steuereinheit (42), welche das von der wenigstens einen Sensoreinrichtung (44/46/48, 62/64/68, 62'/64'/68) bereitgestellte Strichmengen-Signal (Δ_{G}, Δ_{G'}) empfängt, in Abhängigkeit dieses Strichmengen-Signals (Δ_{G}, Δ_{G'}) wenigstens einen Sollwert für die wenigstens eine Stellgröße bestimmt und die wenigstens eine Stellvorrichtung (38/40, 28/54, 58/56) auf Grundlage des wenigstens einen Stellgrößen-Sollwerts ansteuert,
wobei das Farbvorhang-Auftragswerk (12) eine Verteilanordnung (22) zum gleichmäßigen Verteilen des Auftragsmediums (14) in Querrichtung (Q) der Materialbahn (18) umfaßt,
mit einem Verteilkanal (24),
mit einer Zuführöffnung (26) zum Einleiten von Auftragsmedium (14) in den Verteilkanal (24),
mit wenigstens einem Austrittsspalt (36) zur gleichmäßigen Abgabe des Auftragsmediums (14) in Form eines Auftragsmedium-Vorhangs bzw. -Schleiers (16), sowie
gewünschtenfalls mit einer Abführöffnung (32) zum Ableiten überschüssigen, in den Verteilkanal (24) eingeleiteten Auftragsmediums (14), und
wobei die Strichmengen-Sensoreinrichtung (62/64/68, 62'/64'/68) zum Erfassen der Strichmenge der auf die Materialbahn (18) aufgetragenen Auftragsmedium-Schicht (14a) umfaßt:
- eine erste, mit der Zuführöffnung (26) der Verteileinrichtung (22) in Verbindung stehende Sensoreinheit (62, 62'), welche ein erstes Sensorsignal (G₁') bereitstellt,
- eine zweite, der Abführöffnung (32) der Verteileinrichtung (22) zugeordnete Sensoreinheit (64, 64'), welche ein zweites Sensorsignal (G₂') bereitstellt, und
- eine Differenzbildungseinheit (68), welche das erste Sensorsignal (G₁') von dem zweiten Sensorsignal (G₂') abzieht und das Differenzsignal (Δ_{G}') als das Strichmengensignal bereitstellt.

4. Auftragsvorrichtung nach einem der Ansprüche 1 bis 3,
**dadurch gekennzeichnet, daß** die Stellvorrichtung (38/40) wenigstens eine Stelleinheit (40) zum Einstellen der Breite wenigstens eines Austrittsspalts (36) des Farbvorhang-Auftragswerks (12) umfaßt.

5. Auftragsvorrichtung nach Anspruch 4,
**dadurch gekennzeichnet, daß** die Stellvorrichtung (38/40) eine Mehrzahl von in Querrichtung (Q) der Materialbahn (18) verteilt angeordneten Stelleinheiten (40) zum abschnittsweisen Einstellen der Breite wenigstens eines Austrittsspalts (36) des Farbvorhang-Auftragswerks (12) umfaßt.

6. Auftragsvorrichtung nach einem der Ansprüche 1 bis 3,
**dadurch gekennzeichnet, daß** die Stellvorrichtung (28/54) eine Vorrichtung (54) zum Einstellen der Förderleistung einer dem Farbvorhang-Auftragswerk (12) zugeordneten Auftragsmedium-Pumpe (28) umfaßt.

7. Auftragsvorrichtung nach einem der Ansprüche 2 bis 6,
**dadurch gekennzeichnet, daß** die Stellvorrichtung eine Ventilanordnung umfaßt zum Beeinflussen der Menge des pro Zeiteinheit durch die Zuführöffnung in den Verteilkanal eingeleiteten Auftragsmediums.

8. Auftragsvorrichtung nach einem der Ansprüche 2 bis 7,
**dadurch gekennzeichnet, daß** die Stellvorrichtung (58/56) eine Ventilanordnung (58) umfaßt zum Beeinflussen des aus der Abführöffnung (32) wieder ausgeleiteten Bruchteils des über die Zuführöffnung (26) in den Verteilkanal (24) eingeleiteten Auftragsmediums (14).

9. Auftragsvorrichtung nach einem der Ansprüche 3 bis 8,
**dadurch gekennzeichnet, daß** die ersten und zweiten Sensoreinheiten (62, 64) jeweils eine Volumenstrom-Meßvorrichtung umfassen.

10. Auftragsvorrichtung nach einem der Ansprüche 3 bis 8,
**dadurch gekennzeichnet, daß** die ersten und zweiten Sensoreinheiten (62', 64') jeweils eine Massendurchfluß-Meßvorrichtung umfassen.

11. Auftragsvorrichtung nach einem der Ansprüche 1 bis 10,
**dadurch gekennzeichnet, daß** sie eine Sensoreinrichtung (50) zum Erfassen der Laufgeschwindigkeit (V) der Materialbahn (18) umfaßt.

12. Auftragsvorrichtung nach einem der Ansprüche 1 bis 11,
**dadurch gekennzeichnet, daß** sie ferner eine Sensoreinrichtung (52) zum Erfassen der Zusammensetzung (F), beispielsweise des Feststoffgehalts, des Auftragsmediums (14) bzw. der bestrichenen Materialbahnbreite umfaßt.

13. Auftragsvorrichtung nach einem der Ansprüche 1 bis 12,
**dadurch gekennzeichnet, daß** in Laufrichtung (L) der Materialbahn (18) nach dem Farbvorhang-Auftragswerk (12) eine Trocknungsvorrichtung (70) vorgesehen ist.

## Claims

1. Apparatus (10) for the direct or indirect application of liquid or pasty application medium (14) to a moving material web (18), in particular of paper or board, comprising:
- a curtain coater (12),
- at least one sensor device (44/46/48, 62/64/68, 62'/64'/68) for registering the coating quantity of the application medium layer (14a) applied to the material web (18) and for providing a corresponding coating quantity signal (Δ_{G}, Δ_{G'}),
- at least one actuating device (38/40, 28/54, 58/56) for changing at least one manipulated variable of the curtain coater (12), on which the coating quantity of the application medium layer (14a) applied to the material web (18) depends, and
- a control unit (42), which receives the coating quantity signal (Δ_{G}, Δ_{G'}) provided by the at least one sensor device (44/46/48, 62/64/68, 62'/64'/68), determines at least one set point for the at least one manipulated variable as a function of this coating quantity signal (Δ_{G}, Δ_{G'}) and which drives the at least one actuating device (38/40, 28/54, 58/56) on the basis of the at least one manipulated variable set point,
the coating quantity sensor device (44/46/48) for registering the coating quantity of the application medium layer (14a) applied to the material web (18) comprising:
- a first sensor unit (44) which, in the running direction (L) of the material web (18), is arranged before the curtain coater (12) and provides a first sensor signal (G₁),
- a second sensor unit (46) which, in the running direction (L) of the material web (18), is arranged after the curtain coater (12) and provides a second sensor signal (G₂), and
- a difference forming unit (48), which subtracts the first sensor signal (G₁) from the second sensor signal (G₂) and provides the difference signal (Δ_{G}) as the coating quantity signal.

2. Application apparatus according to Claim 1,
**characterized in that** the curtain coater (12) comprises a distribution arrangement (22) for the uniform distribution of the application medium (14) in the transverse direction (Q) of the material web (18),
having a distribution channel (24),
having a feed opening (26) for introducing application medium (14) into the distribution channel (24),
having at least one outlet gap (36) for the uniform discharge of the application medium (14) in the form of an application medium curtain or veil (16), and
if desired, having a discharge opening (32) for draining away excess application medium (14) introduced into the distribution channel (24).

3. Apparatus (10) for the direct or indirect application of liquid or pasty application medium (14) to a moving material web (18), in particular of paper or board, comprising:
- a curtain coater (12),
- at least one sensor device (44/46/48, 62/64/68, 62'/64'/68) for registering the coating quantity of the application medium layer (14a) applied to the material web (18) and for providing a corresponding coating quantity signal (Δ_{G}, Δ_{G'}),
- at least one actuating device (38/40, 28/54, 58/56) for changing at least one manipulated variable of the curtain coater (12), on which the coating quantity of the application medium layer (14a) applied to the material web (18) depends, and
- a control unit (42), which receives the coating quantity signal (Δ_{G}, Δ_{G'}) provided by the at least one sensor device (44/46/48, 62/64/68, 62'/64'/68), determines at least one set point for the at least one manipulated variable as a function of this coating quantity signal (Δ_{G}, Δ_{G'}) and which drives the at least one actuating device (38/40, 28/54, 58/56) on the basis of the at least one manipulated variable set point,
the curtain coater (12) comprising a distribution arrangement (22) for the uniform distribution of the application medium (14) in the transverse direction (Q) of the material web (18),
having a distribution channel (24),
having a feed opening (26) for introducing application medium (14) into the distribution channel (24),
having at least one outlet gap (36) for the uniform discharge of the application medium (14) in the form of an application medium curtain or veil (16), and
if desired, having a discharge opening (32) for draining away excess application medium (14) introduced into the distribution channel (24), and the coating quantity sensor device (62/64/68, 62'/64'/68) for registering the coating quantity of the application medium layer (14a) applied to the material web (18) comprising:
- a first sensor unit (62, 62'), connected to the feed opening (26) of the distribution device (22), which provides a first sensor signal (G₁'),
- a second sensor unit (64, 64'), assigned to the discharge opening (32) of the distribution device (22), which provides a second sensor signal (G₂'), and
- a difference forming unit (68), which subtracts the first sensor signal (G₁') from the second sensor signal (G₂') and provides the difference signal (Δ_{G}') as the coating quantity signal.

4. Application apparatus according to one of Claims 1 to 3, **characterized in that** the actuating device (38/40) comprises at least one actuating unit (40) for adjusting the width of at least one outlet gap (36) of the curtain coater (12).

5. Application apparatus according to Claim 4, **characterized in that** the actuating device (38/40) comprises a plurality of actuating units (40) arranged distributed in the transverse direction (Q) of the material web (18) for adjusting the width, section by section, of at least one outlet gap (36) of the curtain coater (12).

6. Application apparatus according to one of Claims 1 to 3, **characterized in that** the actuating device (28/54) comprises a device (54) for adjusting the delivery output of an application medium pump (28) assigned to the curtain coater (12).

7. Application apparatus according to one of Claims 2 to 6, **characterized in that** the actuating device comprises a valve arrangement for influencing the quantity of application medium introduced into the distribution channel through the feed opening per unit time.

8. Application apparatus according to one of Claims 2 to 7, **characterized in that** the actuating device (58/56) comprises a valve arrangement (58) for influencing the fraction of the application medium (14) introduced into the distribution channel (24) via the feed opening (26) led out of the discharge opening (32) again.

9. Application apparatus according to one of Claims 3 to 8, **characterized in that** the first and second sensor units (62, 64) each comprise a volume flow measuring device.

10. Application apparatus according to one of Claims 3 to 8, **characterized in that** the first and second sensor units (62', 64') each comprise a mass flow measuring device.

11. Application apparatus according to one of Claims 1 to 10, **characterized in that** it comprises a sensor device (50) for registering the running speed (V) of the material web (18).

12. Application apparatus according to one of Claims 1 to 11, **characterized in that** it also comprises a sensor device (52) for registering the composition (F), for example the solids content, of the application medium (14) or of the coated material web width.

13. Application apparatus according to one of Claims 1 to 12, **characterized in that** a drying apparatus (70) is provided after the curtain coater (12) in the running direction (L) of the material web (18) .

## Revendications

1. Dispositif (10) pour le dépôt direct ou indirect de fluide de couchage liquide ou pâteux (14) sur une bande de matière en défilement (18), en particulier de papier ou de carton, comprenant:
- une unité de couchage à rideau (12),
- au moins un dispositif de détection (44/46/48, 62/64/68, 62'/64'/68) pour détecter la quantité d'enduit de la couche de fluide de couchage (14a) déposée sur la bande de matière (18) et pour produire un signal de quantité d'enduit correspondant (Δ_{G}, Δ_{G'}),
- au moins un dispositif de réglage (38/40, 28/54, 58/56) pour modifier au moins une grandeur de réglage de l'unité de couchage à rideau (12), dont dépend la quantité d'enduit de la couche de fluide couchage (14a) déposée sur la bande de matière (18), et
- une unité de commande (42) qui reçoit le signal de quantité d'enduit (Δ_{G}, Δ_{G'}) produit par ledit au moins un dispositif de détection (44/46/48, 62/64/68, 62'/64'/68), détermine au moins une valeur de consigne pour ladite au moins une grandeur de réglage en fonction de ce signal de quantité d'enduit (Δ_{G}, Δ_{G'}), et commande ledit au moins un dispositif de réglage (38/40, 28/54, 58/56) sur la base de ladite au moins une valeur de consigne de grandeur de réglage,
dans lequel le dispositif de détection de la quantité d'enduit (44/46/48) pour détecter la quantité d'enduit de la couche de fluide de couchage (14a) déposée sur la bande de matière (18) comprend:
- une première unité de détection (44) qui est disposée avant l'unité de couchage à rideau (12) dans le sens de défilement (L) de la bande de matière (18) et produit un premier signal de détection (G₁),
- une deuxième unité de détection (46) qui est disposée après l'unité de couchage à rideau (12) dans le sens de défilement (L) de la bande de matière (18) et produit un deuxième signal de détection (G₂), et
- une unité de formation de différence (48) qui soustrait le premier signal de détection (G₁) du deuxième signal de détection (G₂) et produit le signal de différence (Δ_{G}) comme signal de quantité d'enduit.

2. Dispositif de dépôt selon la revendication 1, **caractérisé en ce que** l'unité de couchage à rideau (12) comprend un dispositif de distribution (22) pour distribuer uniformément le fluide de couchage (14) dans la direction transversale (Q) de la bande de matière (18),
avec un canal de distribution (24),
avec une ouverture d'entrée (26) pour introduire du fluide de couchage (14) dans le canal de distribution (24),
avec au moins une fente de sortie (36) pour la délivrance uniforme du fluide de couchage (14) sous la forme d'un rideau ou d'un voile de fluide de couchage (16), et
si on le désire, avec une ouverture d'évacuation (32) pour évacuer le fluide de couchage (14) excédentaire, introduit dans le canal de distribution (24).

3. Dispositif (10) pour le dépôt direct ou indirect de fluide de couchage liquide ou pâteux (14) sur une bande de matière en défilement (18), en particulier de papier ou de carton, comprenant:
- une unité de couchage à rideau (12),
- au moins un dispositif de détection (44/46/48, 62/64/68, 62'/64'/68) pour détecter la quantité d'enduit de la couche de fluide de couchage (14a) déposée sur la bande de matière (18) et pour produire un signal de quantité d'enduit correspondant (Δ_{G}, Δ_{G'}),
- au moins un dispositif de réglage (38/40, 28/54, 58/56) pour modifier au moins une grandeur de réglage de l'unité de couchage à rideau (12), dont dépend la quantité d'enduit de la couche de fluide couchage (14a) déposée sur la bande de matière (18), et
- une unité de commande (42) qui reçoit le signal de quantité d'enduit (Δ_{G}, Δ_{G'}) produit par ledit au moins un dispositif de détection (44/46/48, 62/64/68, 62'/64'/68), détermine au moins une valeur de consigne pour ladite au moins une grandeur de réglage en fonction de ce signal de quantité d'enduit (Δ_{G}, Δ_{G'}), et commande ledit au moins un dispositif de réglage (38/40, 28/54, 58/56) sur la base de ladite au moins une valeur de consigne de grandeur de réglage,
dans lequel l'unité de couchage à rideau (12) comprend un dispositif de distribution (22) pour distribuer uniformément le fluide de couchage (14) dans la direction transversale (Q) de la bande de matière (18),
avec un canal de distribution (24),
avec une ouverture d'entrée (26) pour introduire du fluide de couchage (14) dans le canal de distribution (24),
avec au moins une fente de sortie (36) pour la délivrance uniforme du fluide de couchage (14) sous la forme d'un rideau ou d'un voile de fluide de couchage (16), et
si on le désire, avec une ouverture d'évacuation (32) pour évacuer le fluide de couchage (14) excédentaire, introduit dans le canal de distribution (24),
dans lequel le dispositif de détection de la quantité d'enduit (62/64/68, 62'/64'/68) pour détecter la quantité d'enduit de la couche de fluide de couchage (14a) déposée sur la bande de matière (18) comprend:
- une première unité de détection (62, 62') reliée à l'ouverture d'entrée (26) du dispositif de distribution (22), qui produit un premier signal de détection (G₁'),
- une deuxième unité de détection (64, 64') associée à l'ouverture d'évacuation (32) du dispositif de distribution (22), qui produit un deuxième signal de détection (G₂'), et
- une unité de formation de différence (68) qui soustrait le premier signal de détection (G₁') du deuxième signal de détection (G₂') et produit le signal de différence (Δ_{G'}) comme signal de quantité d'enduit.

4. Dispositif de dépôt selon l'une quelconque des revendications 1 à 3, **caractérisé en ce que** le dispositif de réglage (38/40) comprend au moins une unité de réglage (40) pour régler la largeur d'au moins une fente de sortie (36) de l'unité de couchage à rideau (12).

5. Dispositif de dépôt selon la revendication 4, **caractérisé en ce que** le dispositif de réglage (38/40) comprend une pluralité d'unités de réglage (40) réparties dans la direction transversale (Q) de la bande de matière (18) pour le réglage par segments de la largeur d'au moins une fente de sortie (36) de l'unité de couchage à rideau (12).

6. Dispositif de dépôt selon l'une quelconque des revendications 1 à 3, **caractérisé en ce que** le dispositif de réglage (28/54) comprend un dispositif (54) pour régler le débit d'une pompe à fluide de couchage (28) associée à l'unité de couchage à rideau (12).

7. Dispositif de dépôt selon l'une quelconque des revendications 2 à 6, **caractérisé en ce que** le dispositif de réglage comprend un dispositif de soupape pour influencer la quantité du fluide de couchage introduite par unité de temps dans le canal de distribution à travers l'ouverture d'entrée.

8. Dispositif de dépôt selon l'une quelconque des revendications 2 à 7, **caractérisé en ce que** le dispositif de réglage (58/56) comprend un dispositif de soupape (58) pour influencer la fraction du fluide de couchage (14) introduit dans le canal de distribution (24) par l'ouverture d'entrée (26) qui sort de nouveau par l'ouverture d'évacuation (32).

9. Dispositif de dépôt selon l'une quelconque des revendications 3 à 8, **caractérisé en ce que** la première et la deuxième unités de détection (62, 64) comprennent chacune un dispositif de mesure du débit volumétrique.

10. Dispositif de dépôt selon l'une quelconque des revendications 3 à 8, **caractérisé en ce que** la première et la deuxième unités de détection (62', 64') comprennent chacune un dispositif de mesure du débit massique.

11. Dispositif de dépôt selon l'une quelconque des revendications 1 à 10, **caractérisé en ce qu'**il comprend un dispositif de détection (50) pour détecter la vitesse de défilement (V) de la bande de matière (18).

12. Dispositif de dépôt selon l'une quelconque des revendications 1 à 11, **caractérisé en ce qu'**il comprend en outre un dispositif de détection (52) pour détecter la composition (F), par exemple la teneur en matières solides, du fluide de couchage (14) ou la largeur de la bande de matière enduite.

13. Dispositif de dépôt selon l'une quelconque des revendications 1 à 12, **caractérisé en ce qu'**il est prévu un dispositif de séchage (70) après l'unité de couchage à rideau (12) dans le sens de défilement (L) de la bande de matière (18).
